(19) Europäisches Patentamt
European Patent Office
Office européen des brevets

(11) **EP 4 550 199 A1**

(12) **EUROPEAN PATENT APPLICATION**
published in accordance with Art. 153(4) EPC

(43) Date of publication:
**07.05.2025 Bulletin 2025/19**

(21) Application number: **23900460.9**

(22) Date of filing: **22.11.2023**

(51) International Patent Classification (IPC):
**G06F 30/20** (2020.01) **G01N 3/00** (2006.01)

(52) Cooperative Patent Classification (CPC):
**G01N 3/00; G06F 30/20**

(86) International application number:
**PCT/JP2023/041978**

(87) International publication number:
**WO 2024/122341 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2022 JP 2022196272**

(71) Applicant: **Sumitomo Riko Company Limited
Komaki-shi, Aichi 485-8550 (JP)**

(72) Inventors:
• **WATANABE Naoki
Komaki-shi, Aichi 485-8550 (JP)**
• **YAJIMA Takashi
Komaki-shi, Aichi 485-8550 (JP)**
• **KASAI Seiji
Komaki-shi, Aichi 485-8550 (JP)**
• **KOYAMA Toshiyuki
Nagoya-shi, Aichi 464-8601 (JP)**

(74) Representative: **Kramer Barske Schmidtchen
Patentanwälte PartG mbB
European Patent Attorneys
Landsberger Strasse 300
80687 München (DE)**

(54) **FRACTURE TOUGHNESS SIMULATION DEVICE FOR POLYMER MATERIAL**

(57) A device (1) for simulating a fracture toughness of a polymer material containing a matrix polymer (Pb) includes: an arithmetic processing unit (5) that applies a predetermined stress or a predetermined strain as an initial condition to an entire simulation model (M2) including a matrix polymer model (Mb, Mc) or a crack model (Md) and performs arithmetic processing so that the simulation model (M2) reaches a mechanical equilibrium state; a Gibbs energy calculation unit (6) that calculates a Gibbs energy (G) when the simulation model (M2) reaches the mechanical equilibrium state; and an energy release rate calculation unit (7) that calculates an energy release rate (g) indicating a degree of decrease in the Gibbs energy (G) when a crack size (a) increases.

FIG. 1

**Description**

TECHNICAL FIELD

The present invention relates to a device for simulating a fracture toughness of a polymer material.

BACKGROUND ART

Patent Literature 1 describes a simulation for reproducing a fracture phenomenon of a matrix rubber. A rubber material model used in this simulation is defined using a plurality of rubber elements obtained by modeling a matrix rubber and a first adhesive element that releasably connects the rubber elements. In addition to the rubber elements and the first adhesive element, the rubber material model is defined using a filler element modeling a filler and a second adhesive element that releasably connects the rubber elements and the filler element.

Patent Literature 2 describes a simulation of a fracture phenomenon of a rubber material containing a plurality of polymer components having different physical property values, that is, a polymer blend material. A polymer blend material model is defined using a first polymer chain model in which a first polymer component is represented by first roughened particles and a second polymer chain model in which a second polymer component is represented by second roughened particles, and is further defined so that an interface is formed between the first polymer chain model and the second polymer chain model. Then, deformation of the polymer blend material is calculated by simulation, and the fracture phenomenon at the interface is calculated on the basis of a first interaction potential for defining an interaction between the first roughened particles and a second interaction potential for defining an interaction between the second roughened particles. In this way, a phenomenon in which a pore (void) in which there is neither first polymer chain model nor second polymer chain model is generated is calculated.

PRIOR ART LITERATURE

PATENT LITERATURE

   Patent Literature 1: JP 2018-25489 A
   Patent Literature 2: JP 2020-86835 A

SUMMARY OF INVENTION

PROBLEMS TO BE SOLVED BY INVENTION

As fracture characteristics of a material, fracture toughness characteristics are known. As an index of the fracture toughness characteristics, there is an energy release rate. The energy release rate is defined as a value obtained by dividing an energy lost in development of a crack size by the crack size. That is, the energy release rate indicates a degree to which a Gibbs energy decreases when the crack size increases.

The energy release rate can be obtained by acquiring the Gibbs energy in a state where the crack size is set in the simulation model. However, when an object to be evaluated for fracture toughness characteristics is a polymer material containing a matrix polymer, the simulation is not easy. That is, the energy release rate of the polymer material cannot be obtained with high accuracy.

The smaller the energy release rate, the higher the fracture toughness. As the fracture toughness is higher, a crack is less likely to develop. If the energy release rate, that is, the degree of crack development can be grasped in the simulation of the polymer material, the fracture toughness of an existing polymer material can be grasped. Furthermore, it will also be possible to provide a guideline for a polymer material in which a crack is less likely to develop in the future.

The present invention has been made in view of such a background, and is directed to providing a device for simulating a fracture toughness of a polymer material, which can evaluate fracture toughness characteristics of a polymer material by calculating an energy release rate of the polymer material with high accuracy.

MEANS FOR SOLVING PROBLEMS

One aspect of the present invention is a device for simulating a fracture toughness of a polymer material containing a matrix polymer, the fracture toughness simulation device including:

a storage unit (4) configured to store a simulation model (M2) for each of positional elements in a model definition region, the simulation model including a matrix polymer model (Mb, Mc) corresponding to the matrix polymer or a crack model (Md), wherein an elastic modulus is set such that the matrix polymer model and the crack model have a different elastic modulus, and at least the elastic modulus of the matrix polymer model is set based on a stress and a strain;

a crack model group position setting unit (3, 103) configured to set a position and a dimension of a crack model group, including a plurality of the crack models arranged continuously, in the simulation model;

an arithmetic processing unit (5) configured to apply a predetermined stress or a predetermined strain to the entire simulation model as an initial condition in the simulation model in which the crack model group is set by the crack model group position setting unit, and perform arithmetic processing so that the simulation model reaches a mechanical equilibrium state;

a Gibbs energy calculation unit (6) configured to calculate a Gibbs energy (G) obtained by adding a potential energy (P) decreased with application of the initial condition to an elastic strain energy (E) when the simulation model reaches the mechanical equilibrium state; and

an energy release rate calculation unit (7) configured to calculate an energy release rate (g) indicating a degree of decrease in the Gibbs energy when a crack size (a) increases, based on a relationship between the crack size indicating the dimension of the crack model group set by the crack model group position setting unit and the Gibbs energy calculated by the Gibbs energy calculation unit.

EFFECTS OF INVENTION

According to the above aspect, the simulation model is constituted by a matrix polymer model corresponding to a matrix polymer or a crack model for each positional element in a model definition region. For each of the matrix polymer model and the crack model, an elastic modulus depending on a stress and a strain are set. That is, in the simulation model, an elastic modulus depending on a stress and a strain is set for each positional element.

Here, the matrix polymer does not have a linear relationship in the elastic modulus indicating the relationship of a strain relative to a stress. Therefore, as described above, when a stress or a strain is applied to the simulation model, the elastic modulus of the matrix polymer model can be set to a different value depending on a stress or a strain for each positional element in the simulation model. That is, the matrix polymer changes in elastic modulus depending on a stress and a strain, and thus, the simulation model is a model capable of appropriately capturing such a change phenomenon of the elastic modulus of the matrix polymer.

The arithmetic processing unit performs arithmetic processing using the simulation model in which the elastic modulus depending on a stress and a strain is set for each positional element in this manner. Specifically, the arithmetic processing unit applies a predetermined stress or a predetermined strain to the entire simulation model as an initial condition, and performs arithmetic processing so that the simulation model reaches the mechanical equilibrium state.

Then, when the simulation model reaches the mechanical equilibrium state, the Gibbs energy calculation unit calculates a Gibbs energy obtained by adding a potential energy decreased with the application of the initial condition to an elastic strain energy. Therefore, the calculated Gibbs energy becomes a highly accurate value.

The energy release rate calculation unit calculates an energy release rate on the basis of the relationship between a crack size and the Gibbs energy. The energy release rate thus calculated is highly accurate.

As described above, it is possible to provide a device for simulating a fracture toughness of a polymer material, which can evaluate fracture toughness characteristics of a polymer material by calculating an energy release rate of the polymer material with high accuracy.

It should be note that reference signs in parentheses in the claims indicate correspondence with specific means described in embodiments to be described below, and do not limit the technical scope of the present invention.

BRIEF DESCRIPTION OF DRAWINGS

Fig. 1 is a diagram illustrating a configuration of a device according to a first embodiment.

Fig. 2 is a view showing a cross-sectional image of a polymer material containing a filler and a matrix polymer as a simulation target P.

Fig. 3 is a view illustrating a base model M1 created by a base model creation processing unit constituting the device illustrated in Fig. 1, and illustrating a model defining a filler model Ma, a polymer matrix model Mb, and a polymer interface phase model Mc.

Fig. 4 is an enlarged schematic view (left view) of the base model M1, and a view (right view) illustrating a model type for each positional element in the enlarged view.

Fig. 5 is a diagram showing a secant elastic modulus of a matrix polymer model including the polymer matrix model Mb and the polymer interface phase model Mc.

Fig. 6 is a view illustrating a simulation model M2 in which a crack model Md is added to the base model M1.

Fig. 7 is an enlarged schematic view (left view) of the simulation model M2, and a view illustrating a model type for each positional element in the enlarged view.

Fig. 8 is a flowchart showing processing by the base model creation processing unit constituting the device illustrated in Fig. 1.

Fig. 9 is a flowchart showing processing by a crack model group position setting unit processing unit constituting the device illustrated in Fig. 1.

Fig. 10 is a flowchart showing processing by an arithmetic processing unit constituting the device illustrated in Fig. 1.

Fig. 11 is a view illustrating a state in which a predetermined stress or a predetermined strain is applied to the simulation model M2 in processing by the arithmetic processing unit.

Fig. 12 is a diagram for explaining an energy release rate calculated by an energy release rate calculation unit constituting the device illustrated in Fig. 1.

Fig. 13 is a view illustrating a configuration of a device according to a second embodiment.

Fig. 14 is a view illustrating a process of automatically setting a new crack model group by a crack model group position setting unit illustrated in Fig. 13.

MODE FOR CARRYING OUT INVENTION

(First Embodiment)

1-1. Overview of device 1 for simulating a fracture toughness

A device 1 sets a polymer material as a simulation target. The polymer material as the simulation target includes at least a matrix polymer such as rubber. The polymer material is used in a variety of fields, for example, tires, dampers, shoes, sporting goods, or the like. As the matrix polymer contained in the polymer material, one kind or plural kinds thereof may be used.
The polymer material as the simulation target may be a polymer composite material in which a filler tailored to the purpose is dispersed in the matrix polymer. In addition, an aggregated filler is non-uniformly distributed in the polymer composite material. Examples of the filler include a filler intended for reinforcement and a filler intended for conductivity. It should be noted that the polymer material as the simulation target may contain no filler.
For example, in a tire which is an example of the polymer composite material, a vulcanized rubber reinforced by dispersing a nanofiller as a filler such as carbon black in a matrix polymer is used.
When the polymer material as the simulation target includes a crack, the crack may develop as a load is applied to the polymer material. Here, the crack includes not only a depletion region generated by use of the polymer material but also a depletion region existing in advance at an initial stage of use (at the time of product completion) of the polymer material.
Accordingly, the device 1 is directed to obtaining an energy release rate indicating an amount of energy lost in development of a crack size so as to evaluate fracture toughness of the polymer material. As will be described in detail below, the energy release rate calculated by the device 1 indicates a degree to which a Gibbs energy decreases when the crack size increases.

1-2. Overview of configuration of device 1

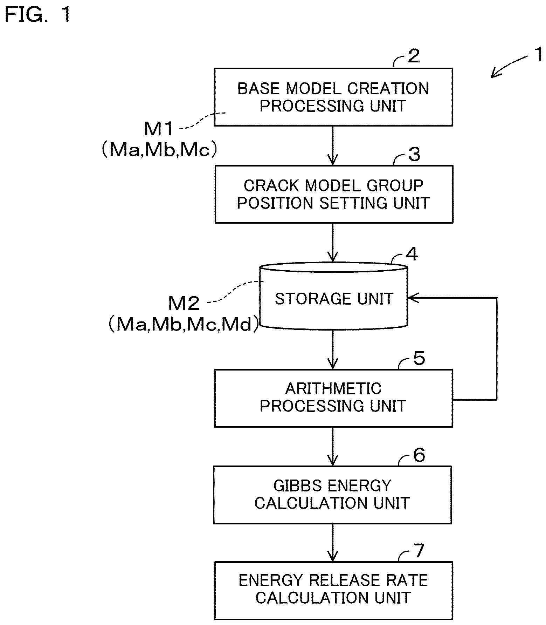

An overview of a configuration of the device 1 will be described with reference to Fig. 1. In the present embodiment, there will be exemplified a case where a polymer material as a simulation target P is a polymer composite material in which a filler is dispersed in a matrix polymer.

The device 1 includes a base model creation processing unit 2, a crack model group position setting unit 3, a storage unit 4, an arithmetic processing unit 5, a Gibbs energy calculation unit 6, and an energy release rate calculation unit 7. The overview of each unit will be described. Details of each unit will be described below.

The base model creation processing unit 2 creates a base model M1 as a base of a simulation model M2. The base model creation processing unit 2 creates the base model M1 including matrix polymer models Mb and Mc corresponding to the matrix polymer or a filler model Ma corresponding to a filler for each positional element in a model definition region. For the base model M1, elastic moduli depending on a stress and a strain for each positional element are set as elastic moduli of the matrix polymer models Mb and Mc. For the base model M1, a preset elastic modulus is set as an elastic modulus of the filler model Ma.

The crack model group position setting unit 3 creates the simulation model M2 by adding a crack model Md corresponding to a crack to the base model M1. In particular, the crack model group position setting unit 3 sets a position and a dimension of a crack model group having a plurality of crack models Md arranged continuously in the simulation model M2. As an elastic modulus of the crack model Md, a preset elastic modulus is set.

The storage unit 4 stores the simulation model M2 created by the base model creation processing unit 2 and the crack model group position setting unit 3. That is, the storage unit 4 stores the simulation model M2 constituted by the filler model Ma, the matrix polymer models Mb and Mc, or the crack model Md for each positional element in the model definition region. The simulation model M2 is set so that the elastic modulus of the filler model Ma, the elastic moduli of the matrix polymer models Mb and Mc, and the elastic modulus of the crack model Md are different. Furthermore, elastic moduli depending on a stress and a strain for each positional element are set as the elastic moduli of the matrix polymer models Mb and Mc.

In the simulation model M2, the arithmetic processing unit 5 applies a predetermined stress or a predetermined strain to the entire simulation model M2 as an initial condition, and performs arithmetic processing so that the simulation model M2 reaches a mechanical equilibrium state. In the present embodiment, the arithmetic processing unit 5 repeats updating of the elastic modulus of the simulation model M2 and the arithmetic processing for bringing the simulation model M2 into the mechanical equilibrium state until the simulation model M2 approaches a stable state.

When the simulation model M2 reaches the mechanical equilibrium state, the Gibbs energy calculation unit 6 calculates a Gibbs energy obtained by adding a potential energy decreased with the application of the initial condition to an elastic strain energy.

The energy release rate calculation unit 7 calculates an energy release rate indicating a degree of decrease in Gibbs energy when the crack size increases, based on the relationship between the crack size indicating the dimension of the crack model group and the Gibbs energy. As described above, the energy release rate is an index indicating the fracture toughness of the polymer material. The smaller energy release rate indicates the higher fracture toughness. That is, as the fracture toughness is higher, a crack is less likely to develop.

1-3. Base model M1

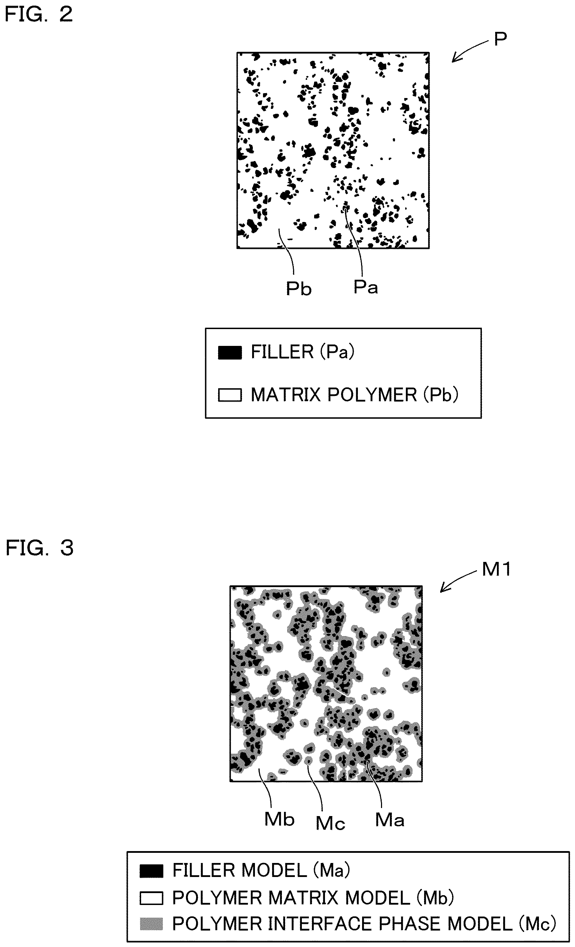

The base model M1 created by the base model creation processing unit 2 will be described with reference to Figs. 2 to 5. The base model creation processing unit 2 creates the base model M1 corresponding to a cross-sectional image of the polymer material as the simulation target P as shown in Fig. 2, that is, the base model M1 as illustrated in Fig. 3.

As shown in Fig. 2, as the polymer material as the simulation target P, a material in which a filler Pa is non-uniformly dispersed in a matrix polymer Pb will be exemplified. Fig. 2 is a cross-sectional image of an actual polymer material. As seen, in the actual polymer material, the filler Pa is not uniformly dispersed but is non-uniformly dispersed. The cross-sectional image of the polymer material as the simulation target P is represented by the filler Pa and the matrix polymer Pb.

The filler Pa is, for example, carbon black or the like. As the filler Pa, in addition to carbon black, a filler for exhibiting various functions can be applied. Furthermore, the filler Pa is formed by aggregation of nanofillers. Thus, aggregated masses of the filler Pa are different in shape and size. The matrix polymer Pb is a rubber or an elastomer, and, for example, styrene-butadiene rubber (SBR) or the like is applied.

The base model M1 is a model corresponding to the cross-sectional image of the polymer material as the simulation target P as shown in Fig. 2. In the present embodiment, the base model M1 has, for example, a model definition region of the mesoscale, that is, a model definition region having 10 nm to 100 μm as one side. When the base model M1 is set as a model having a mesoscale definition region, it is possible to evaluate the fracture toughness characteristics, which is the object described above.

The base model M1 includes the filler model Ma corresponding to the filler Pa and the matrix polymer models Mb and Mc corresponding to the matrix polymer Pb for each positional element in the model definition region. In the present embodiment, the matrix polymer models Mb and Mc corresponding to the matrix polymer Pb are set separately for the polymer matrix model Mb and the polymer interface phase model Mc. Therefore, the base model M1 is composed of any one of the filler model Ma, the polymer matrix model Mb, and the polymer interface phase model Mc for each positional element in the model definition region.

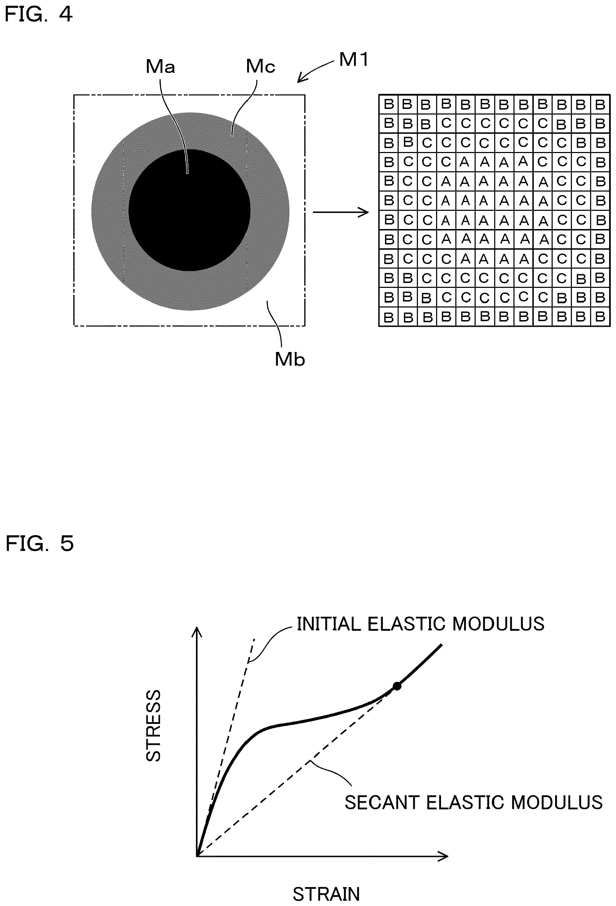

An enlarged schematic view of the filler model Ma, the polymer matrix model Mb, and the polymer interface phase model Mc is illustrated on the left side in Fig. 4, and model types for respective positional elements are illustrated in the enlarged schematic view on the right side in Fig. 4. In the right view of Fig. 4, symbols A, B, and C sequentially correspond to the filler model Ma, the polymer matrix model Mb, and the polymer interface phase model Mc.

The filler model Ma is formed by aggregation of nanofillers as illustrated in Fig. 3. Thus, individual filler models Ma are different in shape and size.

The polymer matrix model Mb is located in a region present as a matrix polymer monolayer. Thus, the polymer matrix model Mb has a property of the matrix polymer monolayer. The polymer matrix model Mb is located at a position slightly away from the filler model Ma. As the polymer matrix model Mb, an Ogden model is applied.

The polymer interface phase model Mc is located between the polymer matrix model Mb and the filler model Ma. In particular, the polymer interface phase model Mc is located on the surface of the filler model Ma. Thus, the polymer interface phase model Mc is represented by a thickness from the surface of the filler model Ma. That is, the position of the polymer interface phase model Mc is set from the surface of the filler model Ma on the basis of thickness information of the polymer interface phase model Mc set in advance. Here, the thickness of the polymer interface phase model Mc can be set in advance, and can be appropriately set depending on the material of the matrix polymer Pb, the material of the filler Pa, and the like.

Further, initial elastic moduli corresponding to the respective models Ma, Mb, and Mc are set. The elastic modulus of the filler model Ma, and the elastic moduli of the matrix polymer models Mb and Mc are set so as to be different.

In the present embodiment, the elastic modulus of the filler model Ma is set to a constant value. For example, the elastic modulus of the filler model Ma is 20 MPa or the like. However, the elastic modulus of the filler model Ma is not limited to this value.

An elastic modulus $Cm(r)$ of the polymer matrix model Mb is set to a different value depending on a position r. Specifically, as shown in Equation (1), the elastic modulus $Cm(r)$ of the polymer matrix model Mb is set depending on a stress and a strain for each positional element. In Equation (1), r represents a position in the model definition region.
[Math. 1]

$$C_m(\mathbf{r}) = C^0(\mathbf{r}) \qquad \cdots \ (1)$$

As shown in Fig. 5, the elastic modulus $Cm(r)$ of the polymer matrix model Mb is set to be a secant elastic modulus $C^0(r)$ representing a slope of a straight line connecting a point on a stress-strain curve and a point of origin. In the base model M1, an initial elastic modulus $C^0(r)$ of the polymer matrix model Mb coincides with the slope of the rising from the point of origin in the stress-strain curve shown in Fig. 5.

An elastic modulus $Cinter(r)$ of the polymer interface phase model Mc may be set to a different value depending on the position r similarly to the polymer matrix model Mb, or may be set to a constant value.

When the elastic modulus $Cinter(r)$ of the polymer interface phase model Mc is set to a different value depending on the position r, the elastic modulus $Cinter(r)$ is defined using a phase field variable $\varphi(r)$ that is a function of the position r as shown in Equation (2).
[Math. 2]

$$C_{inter}(\mathbf{r}) = C^0(\mathbf{r}) + \phi(\mathbf{r})\big(C^1(\mathbf{r}) - C^0(\mathbf{r})\big) \qquad \cdots \ (2)$$

The phase field variable $\varphi(r)$ is a variable for setting an elastic modulus $C(r)$ of the base model M1 for each positional element using a ratio between a predetermined minimum elastic modulus $C^0(r)$ and a predetermined maximum elastic modulus $C^1$. The predetermined minimum elastic modulus $C^0(r)$ is an elastic modulus $C^0(r)$ corresponding to the elastic modulus $Cm(r)$ of the polymer matrix model Mb. That is, the predetermined minimum elastic modulus $C^0(r)$ is obtained from the secant elastic modulus shown in Fig. 5. The predetermined maximum elastic modulus $C^1$ may be a maximum elastic modulus that can be taken as the matrix polymer Pb, or may be an elastic modulus of the filler model Ma.

The phase field variable $\varphi(r)$ takes a value in a range of 0 to 1. That is, when the phase field variable $\varphi(r)$ is 0, the elastic modulus $Cm(r)$ of the polymer interface phase model Mc is the predetermined minimum elastic modulus $C^0(r)$. When the phase field variable $\varphi(r)$ is 1, the elastic modulus $Cm(r)$ of the polymer interface phase model Mc is the predetermined maximum elastic modulus $C^1$.

The phase field variable $\varphi(r)$ can be set to a different value depending on the position r. For example, the phase field variable φ(r) can be set to a different value depending on a distance from the filler model Ma. Specifically, the closer the position r is to the filler model Ma, the closer the phase field variable φ(r) is to 1, and the farther the position r is from the filler model Ma, the closer the phase field variable φ(r) is to 0.

In particular, the phase field variable φ(r) is preferably defined to be a value that continuously changes from the polymer matrix model Mb side to the filler model Ma side. In this case, the elastic modulus Cinter(r) of the polymer interface phase model Mc continuously changes from the polymer matrix model Mb to the filler model Ma side.

The phase field variable φ(r) can be set to a constant value regardless of the position r. For example, the phase field variable φ(r) is set to 0.5 or the like.

In addition, the elastic modulus Cinter(r) of the polymer interface phase model Mc may be a constant value instead of a function using the phase field variable φ(r). For example, it is set to 10 MPa or the like. The elastic modulus of the polymer interface phase model Mc is set to, for example, an intermediate value of the elastic modulus of the filler model Ma.

1-4. Simulation model M2

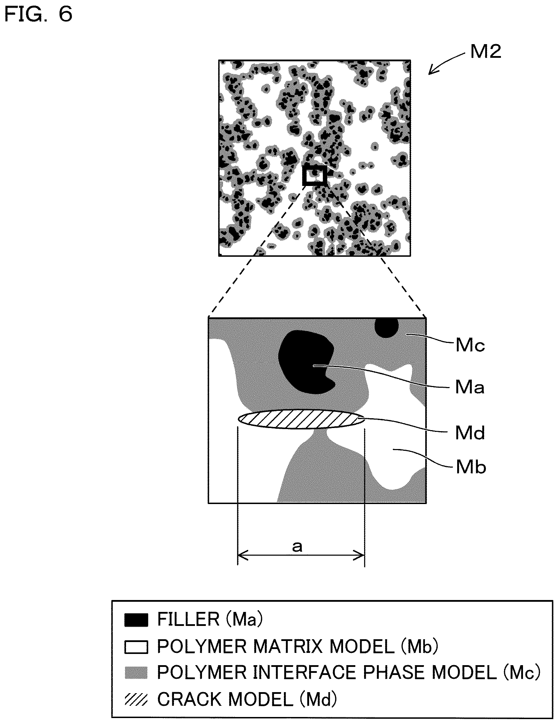

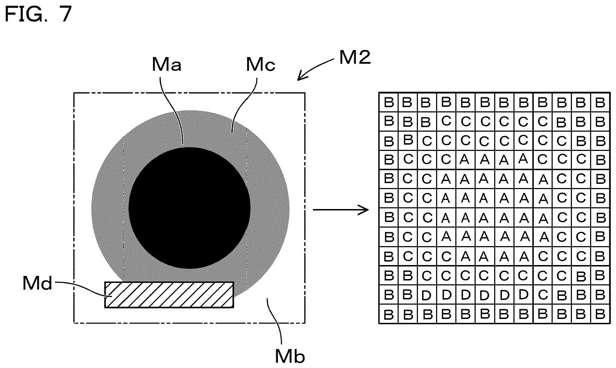

The simulation model M2 will be described with reference to Figs. 6 and 7. The simulation model M2 is created by the crack model group position setting unit 3 and is stored in the storage unit 4, as described above.

The simulation model M2 is created by adding the crack model Md corresponding to a crack to the base model M1. As illustrated in Figs. 6 and 7, the crack model group having a plurality of crack models Md arranged continuously is set in the simulation model M2. The position and the dimension of the crack model group are set by continuously forming a plurality of crack models Md.

For example, as illustrated in Fig. 6, the crack model group is set to an elongated elliptical shape having a large aspect ratio, a linear shape (e.g., a straight line shape) having a length in one direction, or the like. Here, the crack model group is set in such a manner that the longitudinal direction is orthogonal to a direction of a predetermined stress or a predetermined strain applied to the simulation model M2. In Figs. 6 and 7, a predetermined stress or a predetermined strain is applied in the vertical direction, and thus, the longitudinal direction of the crack model group is set to extend in the horizontal direction. The elastic modulus of the crack model Md is set to 0.

Accordingly, the simulation model M2 is composed of any one of the filler model Ma, the polymer matrix model Mb, the polymer interface phase model Mc, and crack model Md, for each positional element in the model definition region. Furthermore, the simulation model M2 is set in such a manner that the elastic modulus of the filler model Ma, the elastic moduli of the matrix polymer models Mb and Mc, and the elastic modulus of the crack model Md are different from each other. In particular, an elastic modulus depending on a stress and a strain is set as at least the elastic modulus of the polymer matrix model Mb. As described above, the elastic modulus of the polymer interface phase model Mc may be set to a constant value or may be set to a different elastic modulus depending on the position.

1-5. Processing of base model creation processing unit 2

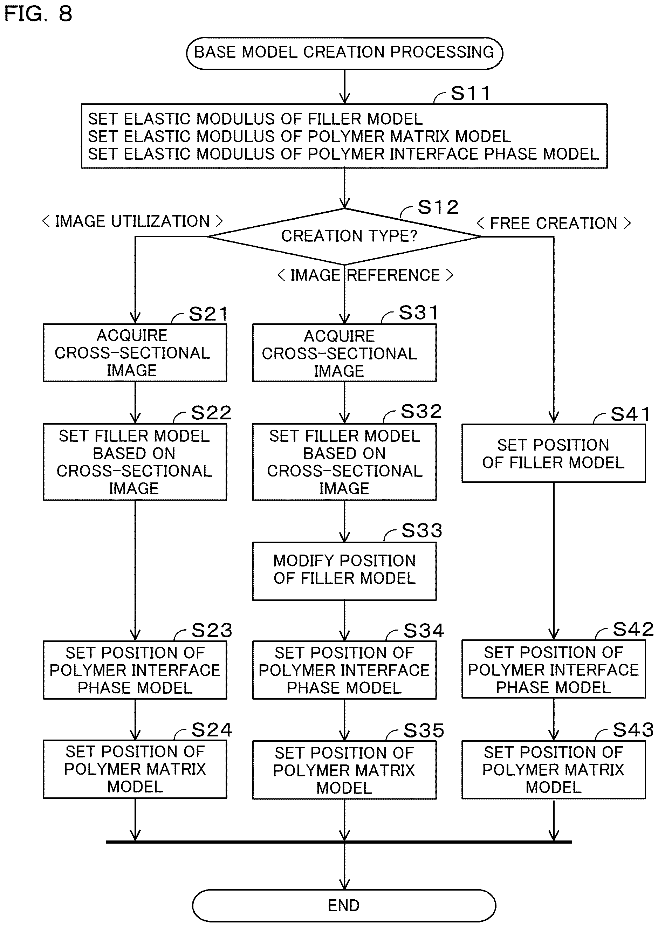

Creation processing of the base model M1 by the base model creation processing unit 2 will be described with reference to Fig. 8. The base model creation processing unit 2 selects a creation type of the base model M1 (S11). The creation type of the base model M1 can be selected from an image utilization method, an image reference method, and a free creation method.

When the image utilization method is selected in S11 (S12: Image utilization), first, a cross-sectional image of the polymer material as the simulation target P as shown in Fig. 2 is acquired (S21). The cross-sectional image is represented by the filler Pa and the matrix polymer Pb. The cross-sectional image of the polymer material as the simulation target P has a size corresponding to the model definition region.

Subsequently, the base model M1 is created on the basis of the cross-sectional image. First, as illustrated in Fig. 3, the position of the filler model Ma corresponding to the filler Pa is set on the basis of on the cross-sectional image (S22). For example, when the cross-sectional image shown in Fig. 2 is binarized, it is possible to specify the position of the filler model Ma.

Subsequently, the matrix polymer model corresponding to the matrix polymer Pb is set separately for the polymer matrix model Mb and the polymer interface phase model Mc. First, the position of the polymer interface phase model Mc is set (S23). On the basis of thickness information of the polymer interface phase model Mc set in advance, the position of the polymer interface phase model Mc is set to a thickness region corresponding to the thickness information from the surface of the filler model Ma.

Subsequently, the remaining region of the matrix polymer model is set as the position of the polymer matrix model Mb (S24). In this manner, the base model M1 is created. That is, as illustrated in Fig. 3, the base model M1 is composed of any one of the filler model Ma, the polymer matrix model Mb, and the polymer interface phase model Mc, for each positional element in the model definition region.

When the image reference method is selected in S11 (S12: Image reference), first, a cross-sectional image of the polymer material as the simulation target P as shown in Fig. 2 is acquired (S31). The cross-sectional image is represented by the filler Pa and the matrix polymer Pb.

Subsequently, the base model M1 is created on the basis of the cross-sectional image. First, as illustrated in Fig. 3, the position of the filler model Ma corresponding to the filler Pa is set on the basis of the cross-sectional image (S32). For example, when the cross-sectional image shown in Fig. 2 is binarized, it is possible to specify the position of the filler model Ma. Subsequently, the position of the filler model Ma is corrected by an input of an operator (S33). For example, a positional element in which the filler model Ma does not exist is added as the filler model Ma, or a positional element as the filler model Ma is not set to a state of not being the filler model Ma.

Subsequently, the matrix polymer model corresponding to the matrix polymer Pb is set separately for the polymer matrix model Mb and the polymer interface phase model Mc. First, the position of the polymer interface phase model Mc is set (S34). On the basis of thickness information of the polymer interface phase model Mc set in advance, the position of the polymer interface phase model Mc is set to a thickness region corresponding to the thickness information from the surface of the filler model Ma.

Subsequently, the remaining region of the matrix polymer model is set as the position of the polymer matrix model Mb (S35). In this manner, the base model M1 is created. That is, as illustrated in Fig. 3, the base model M1 is composed of any one of the filler model Ma, the polymer matrix model Mb, and the polymer interface phase model Mc, for each positional element in the model definition region.

When the free creation method is selected in S11 (S12: Free creation), first, the position of the filler model Ma is set in the model definition region by an input of the operator (S41). Subsequently, the matrix polymer model corresponding to the matrix polymer Pb is set separately for the polymer matrix model Mb and the polymer interface phase model Mc. First, the position of the polymer interface phase model Mc is set (S42). On the basis of thickness information of the polymer interface phase model Mc set in advance, the position of the polymer interface phase model Mc is set to a thickness region corresponding to the thickness information from the surface of the filler model Ma. Subsequently, the remaining region of the matrix polymer model is set as the position of the polymer matrix model Mb (S43).

In this manner, the base model M1 is created. That is, as illustrated in Fig. 4, the base model M1 is composed of any one of the filler model Ma, the polymer matrix model Mb, and the polymer interface phase model Mc, for each positional element in the model definition region.

1-6. Processing of crack model group position setting unit 3

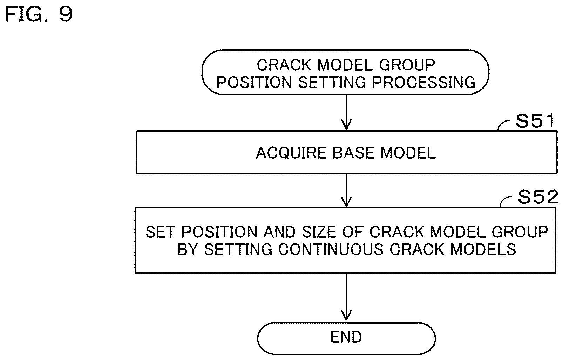

Processing by the crack model group position setting unit 3 will be described with reference to Fig. 9. The crack model group position setting unit 3 acquires the base model M1 created by the base model creation processing unit 2 (S51).

Subsequently, the crack model Md is added to the base model M1 by an input of the operator. At this time, a crack model group having a plurality of crack models Md arranged continuously is set. In this manner, the position and the dimension of the crack model group are set (S52). That is, the crack model group position setting unit 3 is configured to set the position and the dimension of the crack model group by an input of the operator.

In this manner, the crack model group is additionally set to the base model M1, whereby the simulation model M2 as illustrated in Fig. 6 is created. The created simulation model M2 is stored in the storage unit 4.

1-7. Processing of arithmetic processing unit 5

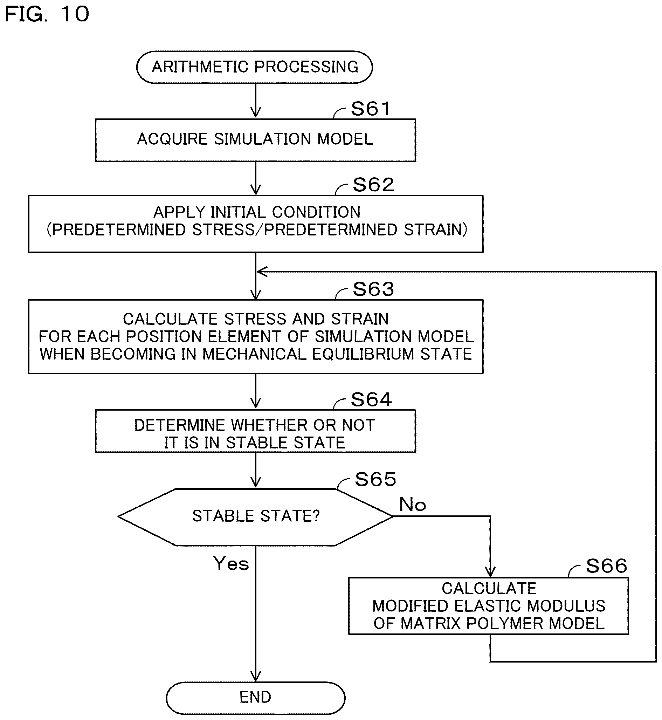

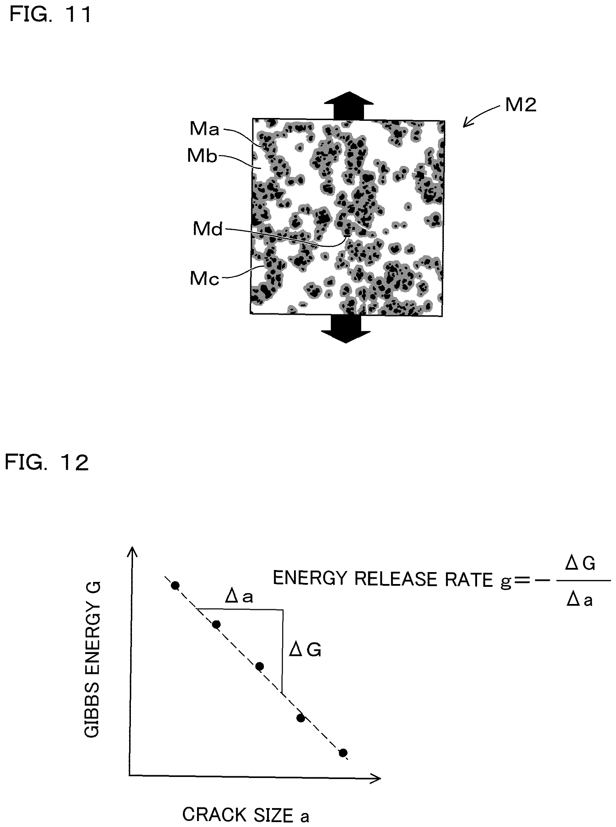

Processing of the arithmetic processing unit 5 will be described with reference to Figs. 10 and 11. The arithmetic processing unit 5 uses the simulation model M2 to perform arithmetic processing so that the simulation model M2 reaches a mechanical equilibrium state when a predetermined stress or a predetermined strain is applied. Then, the arithmetic processing unit 5 calculates a stress and a strain for each positional element of the simulation model M2 at the time of being in the mechanical equilibrium state. The processing of the arithmetic processing unit 5 is specifically performed as follows.

As illustrated in Fig. 10, the arithmetic processing unit 5 acquires the simulation model M2 stored in the storage unit 4 (S61). The simulation model M2 is composed of at least one of the filler model Ma, the polymer matrix model Mb, the polymer interface phase model Mc, and the crack model Md, for each positional element.

Subsequently, an initial condition is applied to the entire simulation model M2 (S62). As the initial condition, as illustrated in Fig. 11, a predetermined stress is applied in a direction in which the upper and lower ends of the simulation model M2 are pulled up and down. Alternatively, as the initial condition, a predetermined strain in the vertical direction may be applied instead of the predetermined stress.

Subsequently, with the elastic modulus in each of the positional elements of the current simulation model M2 as the current elastic modulus, arithmetic processing is performed so that the simulation model M2 to which the initial condition is applied reaches a mechanical equilibrium state (S63). In the first stage, the elastic modulus in each of the positional elements of the current simulation model M2 is an elastic modulus initially set in each of the filler model Ma, the polymer matrix model Mb, the polymer interface phase model Mc, and the crack model Md. Then, arithmetic processing is performed so as to achieve the mechanical equilibrium state, thereby calculating a stress and a strain for each positional element of the simulation model M2 at the time of being in the mechanical equilibrium state.

The arithmetic processing is performed so as to achieve the mechanical equilibrium state, specifically, by solving the mechanical equilibrium equation (force balance equation) shown in Equation (3) by numerical analysis. Here, in a state where an object is stationary, the stress inside the object is balanced, and thus Equation (3) is satisfied.

[Math. 3]

$$\sigma(\mathbf{r}) = 0 \qquad \cdots \quad (3)$$

Subsequently, it is determined whether the simulation model M2 at the time of being the mechanical equilibrium state is in a stable state set in advance (S64). The stable state is defined as a state within a predetermined range from a state in which minus twice an elastic strain energy E of the entire simulation model M2 equals a potential energy P on the basis of the virial theorem. The most stable state is a case where Equation (4) is satisfied.

[Math. 4]

$$P = -2E \qquad \cdots \quad (4)$$

Here, the elastic strain energy E is calculated on the basis of a stress and a strain for each positional element of the simulation model M2. Furthermore, the potential energy P is calculated on the basis of the stress and the strain of the entire simulation model M2.

Further, the stable state can be as follows in addition to the determination based on the virial theorem. The stable state can also be a state in which changes in strain for all the positional elements of the simulation model M2 are equal to or less than a predetermined value.

When it is determined that the preset stable state has been reached in the determination in S64 (S65: Yes), the processing of the arithmetic processing unit 5 is ended.

On the other hand, when it is determined that the stable state has not been reached yet (S65: No), an updated elastic modulus in the positional element of the polymer matrix model Mb is calculated (S66). At this time, the elastic modulus of each positional element of the polymer matrix model Mb is a secant elastic modulus corresponding to the stress and the strain for the positional element. The secant elastic modulus is a slope of a straight line connecting a point on the stress-strain curve shown in Fig. 5 and the point of origin. When the polymer interface phase model Mc is not a constant value, it is updated depending on the updated elastic modulus of the polymer matrix model Mb.

Returning to S63 again, the elastic moduli in the positional element of the matrix polymer models Mb and Mc are updated to the updated elastic moduli, and the arithmetic processing is performed again so that the simulation model M2 reaches the mechanical equilibrium state (S63). Then, a stress and a strain for each positional element of the simulation model M2 at the time of being in the mechanical equilibrium state are calculated.

Then, it is determined again whether it is in the stable state (S65), and until the stable state is reached, the elastic moduli are updated, and the arithmetic processing is repeatedly performed so as to achieve the mechanical equilibrium state.

In this manner, convergence calculation is performed until the simulation model M2 approaches the preset stable state. That is, the calculation of the updated elastic moduli and the calculation of the stress and the strain for each positional element of the simulation model M2 are repeatedly performed until the simulation model M2 approaches the stable state. The stress, strain, and elastic modulus for each positional element of the simulation model M2 when the simulation model M2 finally reaches the mechanical equilibrium state as the stable state are calculated by repetitive processing.

1-8. Processing of Gibbs energy calculation unit 6

Processing of the Gibbs energy calculation unit 6 will be described. When the simulation model M2 approaches the stable state and reaches the mechanical equilibrium state, the Gibbs energy G is obtained by adding the potential energy P decreased with the application of the initial condition to the elastic strain energy E. The Gibbs energy G is obtained by Equation (5).

[Math. 5]

$$G = E + P \qquad \cdots \quad (5)$$

Expression (5) can be expressed as Expression (6). In Expression (6), the first term on the right side is the elastic strain energy E, and the second term on the right side is the potential energy P.

[Math. 6]

$$G = \frac{1}{2} \int_{\mathbf{r}} C_{ijkl}(\mathbf{r}) \left[ \varepsilon_{ij}(\mathbf{r}) - \varepsilon_{ij}^*(\mathbf{r}) \right] \left[ \varepsilon_{ij}(\mathbf{r}) - \varepsilon_{ij}^*(\mathbf{r}) \right] d\mathbf{r}$$

$$- \int_{\mathbf{r}} \sigma_{ij}^A \, \varepsilon_{ij}(\mathbf{r}) d\mathbf{r} \qquad \cdots (6)$$

1-9. Processing of energy release rate calculation unit 7

Processing of the energy release rate calculation unit 7 will be described with reference to Fig. 12. In the graph in Fig. 12, the horizontal axis represents a crack size a, and the vertical axis represents the Gibbs energy G. As illustrated in Fig. 6, the crack size a is a length of the crack model group in a predetermined direction. In the present embodiment, as illustrated in Fig. 11, when a predetermined stress or a predetermined strain is applied to the simulation model M2, the crack size a is a length in a direction orthogonal to the direction in which the predetermined stress or the predetermined strain is applied.

As described above, the simulation model M2 is created by setting the position and the dimension of the crack model group by the crack model group position setting unit 3. The Gibbs energy G in the simulation model M2 can be acquired by the processing of the arithmetic processing unit 5 and the processing of the Gibbs energy calculation unit 6. Accordingly, when one type of crack model group is set, one Gibbs energy G can be acquired. In Fig. 12, the Gibbs energy G when the crack size a is the smallest value is plotted.

Subsequently, the crack model group position setting unit 3 creates a simulation model M2 in which the crack size a is increased, and acquires the Gibbs energy G in the simulation model M2. In this manner, the Gibbs energy G for each of the plurality of crack sizes a is acquired. Then, as shown in Fig. 12, a plurality of plot points can be obtained.

As can be seen from Fig. 12, the relationship between the crack size and the Gibbs energy G usually has a relationship in which the Gibbs energy G decreases as the crack size a increases. This relationship is satisfied when the simulation is appropriately performed. As shown in Fig. 12, the relationship of the Gibbs energy G with respect to the crack size a has a linear relationship.

The energy release rate g has the relationship of Equation (7). That is, the energy release rate g indicates a degree to which the Gibbs energy decreases when the crack size increases. In Fig. 12, a value obtained by inverting the sign of the slope of the straight line connecting the plotted points is the energy release rate g.

[Math. 7]

$$g = -\frac{\Delta G}{\Delta a} \qquad \cdots (7)$$

Thus, when the Gibbs energy G for each of a plurality of the crack sizes a is acquired, a primary approximation straight line is calculated on the basis of the plurality of plot points. The primary approximation straight line corresponds to the broken line in Fig. 12. Then, a value obtained by inverting the sign of the slope of the primary approximation straight line is calculated as the energy release rate g. In this manner, the energy release rate g when the crack model is added to the base model M1 as the target can be obtained.

1-10. Action and effect

The device 1 includes:

the storage unit 4 configured to store a simulation model (M2) for each positional element in a model definition region, the simulation model M2 including the matrix polymer models Mb and Mc corresponding to the matrix polymer Pb or the crack model Md, wherein an elastic modulus is set such that the matrix polymer model Mb and Mc and the crack model Md have a different elastic modulus, and at least the elastic modulus of the matrix polymer model Mb and Mc is set based on a stress and a strain;

the crack model group position setting unit 3 configured to set a position and a dimension of a crack model group, including a plurality of the crack models Md arranged continuously, in the simulation model M2;

the arithmetic processing unit 5 configured to apply a predetermined stress or a predetermined strain to the entire simulation model M2 as an initial condition in the simulation model M2 in which the crack model group is set by the crack model group position setting unit 3, and perform arithmetic processing so that the simulation model M2 reaches a mechanical equilibrium state;

the Gibbs energy calculation unit 6 configured to calculate the Gibbs energy G obtained by adding the potential energy P decreased with the application of the initial condition to the elastic strain energy E when the simulation model M2 reaches the mechanical equilibrium state; and

the energy release rate calculation unit 7 configured to calculate an energy release rate g indicating a degree of decrease in Gibbs energy G when a crack size increases, based on a relationship between the crack size a indicating the dimension of the crack model group set by the crack model group position setting unit 3 and the Gibbs energy calculated by the Gibbs energy calculation unit 6.

According to the device 1 described above, the simulation model M2 is constituted by the matrix polymer models Mb and Mc corresponding to the matrix polymer Pb or the crack model Md for each positional element in the model definition region. For each of the matrix polymer models Mb and Mc and the crack model Md, an elastic modulus depending on a stress and a strain is set. That is, in the simulation model M2, an elastic modulus depending on a stress and a strain is set for each positional element.

Here, the matrix polymer Pb does not have a linear relationship in elastic modulus indicating the relationship of a strain relative to a stress. Thus, as described above, when a stress or a strain is applied to the simulation model M2, the elastic moduli of the matrix polymer models Mb and Mc can be set to different values depending on the stress or the strain for each positional element in the simulation model M2. That is, the matrix polymer Pb changes in elastic modulus depending on a stress and a strain, and thus, the simulation model M2 is a model capable of appropriately capturing such a change phenomenon of the elastic modulus of the matrix polymer Pb.

The arithmetic processing unit 5 performs arithmetic processing using the simulation model M2 in which the elastic modulus depending on the stress and the strain is set for each positional element in this manner. Specifically, the arithmetic processing unit 5 applies a predetermined stress or a predetermined strain to the entire simulation model M2 as an initial condition, and performs arithmetic processing so that the simulation model M2 reaches the mechanical equilibrium state.

Then, when the simulation model M2 reaches the mechanical equilibrium state, the Gibbs energy calculation unit 6 calculates the Gibbs energy G obtained by adding the potential energy P decreased with the application of the initial condition to the elastic strain energy. Thus, the calculated Gibbs energy G becomes a highly accurate value.

The energy release rate calculation unit 7 calculates the energy release rate g on the basis of the relationship between the crack size a and the Gibbs energy G. The energy release rate g thus calculated is highly accurate.

As described above, the energy release rate g of the polymer material can be calculated with high accuracy. As a result, the fracture toughness characteristics of the polymer material can be appropriately evaluated.

Further, the arithmetic processing unit 5 is configured to:

perform arithmetic processing so that the simulation model M2 to which the initial condition is applied reaches the mechanical equilibrium state, with an elastic modulus in each positional element of the current simulation model M2 as a current elastic modulus, thereby calculating a stress and a strain for each positional element of the simulation model M2 when the simulation model M2 reaches the mechanical equilibrium state;

calculate updated elastic moduli for the positional elements of the matrix polymer models Mb and Mc on the basis of the stress and strain for each positional element of the matrix polymer models Mb and Mc;

update the elastic moduli for the positional elements of the matrix polymer models Mb and Mc to the updated elastic moduli, and perform arithmetic processing again so that the simulation model M2 reaches the mechanical equilibrium state, thereby calculating the stress and the strain for each positional element of the simulation model M2 when the simulation model M2 reaches the mechanical equilibrium state; and

repeatedly perform the calculation of the updated elastic moduli and the calculation of the stress and the strain for each positional element of the simulation model M2 until the state approaches a preset stable state, thereby calculating the stress, the strain, and the elastic modulus for each positional element of the simulation model M2 when the simulation model M2 reaches the mechanical equilibrium state as the stable state.

That is, the arithmetic processing unit repeatedly updates the elastic modulus until the simulation model M2 approaches the stable state, and the arithmetic processing is performed using the updated elastic modulus so that the simulation model M2 reaches the mechanical equilibrium state. Here, the matrix polymer is a material whose elastic modulus changes when a stress or a strain changes.

Accordingly, even if the mechanical equilibrium state is reached using the elastic modulus as the initial condition in the simulation model M2, the elastic modulus also changes as the stress and the strain change in each positional element of the matrix polymer models Mb and Mc.

Thus, even if the elastic modulus as the initial condition is used to reach the mechanical equilibrium state, the elastic modulus is updated to an elastic modulus corresponding to the stress or the strain after the change, arithmetic processing is performed so as to reach the mechanical equilibrium state again, and this processing is repeatedly performed. That is, convergence calculation is performed until the stable state is obtained. When this repetitive calculation is performed, the relationship among the elastic modulus, the stress, and the strain for each positional element of the matrix polymer can be stabilized. Then, the arithmetic processing unit 5 calculates the energy release rate g using the stress and the strain for each positional element of the simulation model M2 in the stable state, whereby it is possible to obtain the energy release rate g with high accuracy.

In addition, one example of the stable state is defined as a state within a predetermined range from a state in which minus twice the elastic strain energy equals the potential energy. This is a so-called state based on the virial theorem. In this manner, when the stable state is defined using the virial theorem, the stress and the strain for each positional element of the simulation model M2 calculated by the arithmetic processing unit 5 become highly accurate.

The stable state is also defined as a state in which changes in strain for all the positional elements of the simulation model M2 are equal to or less than a predetermined value. As described above, even if the change in strain is used, the stress and the strain for each positional element of the simulation model M2 calculated by the arithmetic processing unit 5 can be made highly accurate.

Further, the matrix polymer models Mb and Mc are set on the basis of the secant elastic modulus representing a slope of the straight line connecting a point on the stress-strain curve and the point of origin as shown in Fig. 5. When the secant elastic modulus is also used, the repetitive calculation in the arithmetic processing unit 5 can be speeded up.

The crack model group position setting unit 3 is configured to set the position and the dimension of the crack model group by an input of the operator. The operator can freely set the crack model group, and thus, the degree of freedom is high.

The polymer material is a polymer composite material in which the filler Pa is dispersed in the matrix polymer Pb. The simulation model M2 is composed of the matrix polymer models Mb and Mc, the filler model Ma corresponding to the filler Pa, or the crack model Md, for each positional element in the model definition region.

In general, the polymer composite material in which the filler Pa is dispersed is not easy to evaluate the fracture toughness characteristics. However, when the present embodiment is applied, the fracture toughness characteristics can be easily evaluated.

In addition, the matrix polymer models Mb and Mc are composed of the polymer matrix model Mb and the polymer interface phase model Mc located between the polymer matrix model Mb and the filler model Ma. In the polymer interface phase model Mc, the elastic modulus Cinter(r) of the polymer interface phase model Mc is defined using the phase field variable $\varphi(r)$ for setting a ratio between the predetermined minimum elastic modulus $C^0(r)$ and the predetermined maximum elastic modulus $C^1(r)$, for each positional element. This makes it possible to evaluate the fracture toughness characteristics with higher accuracy. However, the elastic modulus Cinter(r) of the polymer interface phase model Mc may be a constant value without using the phase field variable $\varphi(r)$.

In addition, in the elastic modulus Cinter(r) of the polymer interface phase model Mc, the phase field variable $\varphi(r)$ is preferably defined to be a value that continuously changes from the polymer matrix model Mb side to the filler model Ma side. This makes it possible to evaluate the fracture toughness characteristics with higher accuracy.

Furthermore, the elastic strain energy E is calculated on the basis of the stress and the strain for each positional element of the simulation model M2, and the potential energy P is calculated on the basis of the strain of the entire simulation model M2.

(Second Embodiment)

2-1. Configuration of device 100

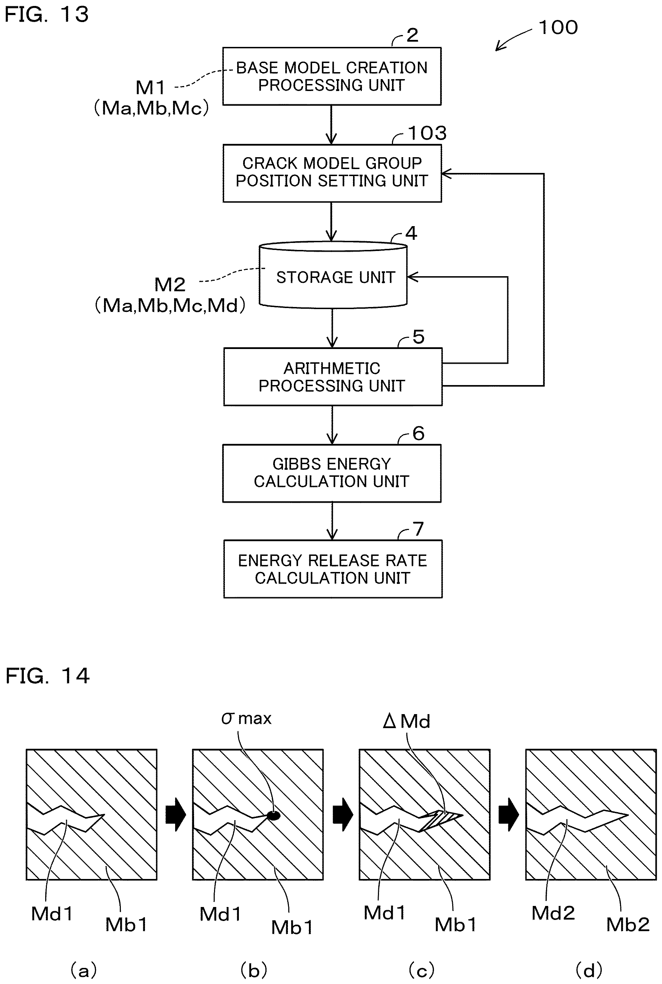

A configuration of a device 100 of the second embodiment will be described with reference to Fig. 13. The same components as those of the device 1 of the first embodiment are denoted by the same reference numerals, and the description thereof will be omitted.

The device 100 of the second embodiment is different from the first embodiment in a crack model group position setting unit 103. The crack model group position setting unit 3 constituting the device 1 of the first embodiment illustrated in Fig. 1 is configured so that the position and the dimension of the crack model group are set by an input of an operator. On the other hand, the crack model group position setting unit 103 of the second embodiment is configured to set a position and a dimension of a crack model group by an input of an operator in the first session. However, the crack model group position setting unit 103 is configured to set the position and the dimension of the crack model group automatically in the second or subsequent sessions.

Here, in an actual polymer material, a portion having a large stress around an existing crack develops as a new crack. Thus, in the simulation model M2, setting of a new crack model group is also performed using a similar idea.

The crack model group position setting unit 103 determines a portion where the crack model develops on the basis of the magnitude of a stress for each positional element of the simulation model M2 calculated by the arithmetic processing unit 5, and sets a new crack model group. Accordingly, as long as the operator inputs the crack model group as the initial condition, the processing of the arithmetic processing unit 5 and the processing of the Gibbs energy calculation unit 6 are automatically repeated while repeatedly updating the crack model group. As a result, it is possible to automatically acquire a plurality of plot points representing the crack size a and the Gibbs energy G necessary for the energy release rate calculation unit 7 to calculate the energy release rate g. That is, the energy release rate g can be easily calculated.

2-2. Setting of crack model group

Setting of a new crack model group by the crack model group position setting unit 103 will be described with reference to Fig. 14.

Figs. 14(a), (b), (c), and (d) illustrate a part of the polymer matrix model Mb and a part of the crack model Md, and illustrate a development process of the crack model Md in the polymer matrix model Mb. As illustrated in Fig. 14(a), a case where a crack model group constituted by a continuous crack model Md1 exists inside a polymer matrix model Mb1 is defined as an initial state.

By the processing by the arithmetic processing unit 5, a stress for each positional element of the simulation model M2 is calculated in a state where a predetermined stress or a predetermined strain is applied to the entire simulation model M2. As illustrated in Fig. 14(b), for example, a portion σmax indicated by a black mark is a portion where the stress is maximized. As illustrated in Fig. 14(b), generally, the vicinity of the end of the crack model group having the crack model Md1 arranged continuously is a portion to which a large stress is applied.

Subsequently, as illustrated in Fig. 14(c), the crack model group position setting unit 103 determines a region ΔMd in which the crack model Md1 develops on the basis of the stress for each positional element of the simulation model M2. That is, the position and the dimension of the expanding crack model group are determined. For example, it may be determined whether or not the stress for each positional element is equal to or greater than a predetermined value, and a positional element in which the stress is equal to or greater than the predetermined value may be determined as an element in which the crack model Md1 develops. Alternatively, a positional element in which the stress for each positional element is equal to or greater than a predetermined ratio (e.g., 80%) with respect to the stress maximum value σmax may be determined as an element in which the crack model Md1 develops.

Then, as illustrated in Fig. 14(d), a crack model group based on a new crack model Md2 is determined by adding the development region ΔMd to the crack model group based on the existing crack model Md1. That is, a crack model group constituted by the new continuous crack model Md2 is located inside a new polymer matrix model Mb2. Then, the new simulation model M2 is automatically created.

2-3. Action and effect

As described above, the crack model group position setting unit 103 is configured to determine the position and the dimension of the crack model group expanding on the basis of the stress in the positional element of the simulation model M2 through arithmetic processing, and set the position and the dimension of the expanded crack model group as the position and the dimension of the crack model group constituting a next simulation model M2.

As described above, the crack model group position setting unit 103 can automatically determine the next crack model group, and thus, the energy release rate g can be easily obtained.

**Claims**

1. A device (1, 100) for simulating fracture toughness of a polymer material containing a matrix polymer (Pb), the device comprising:

   a storage unit (4) configured to store a simulation model (M2) for each of positional elements in a model definition region, the simulation model including a matrix polymer model (Mb, Mc) corresponding to the matrix polymer or a crack model (Md), wherein an elastic modulus is set such that the matrix polymer model and the crack model have a different elastic modulus, and at least the elastic modulus of the matrix polymer model is set based on a stress and a strain;

a crack model group position setting unit (3, 103) configured to set a position and a dimension of a crack model group, including a plurality of the crack models arranged continuously, in the simulation model;

an arithmetic processing unit (5) configured to apply a predetermined stress or a predetermined strain to the entire simulation model as an initial condition in the simulation model in which the crack model group is set by the crack model group position setting unit, and perform arithmetic processing so that the simulation model reaches a mechanical equilibrium state;

a Gibbs energy calculation unit (6) configured to calculate a Gibbs energy (G) obtained by adding a potential energy (P) decreased with application of the initial condition to an elastic strain energy (E) when the simulation model reaches the mechanical equilibrium state; and

an energy release rate calculation unit (7) configured to calculate an energy release rate (g) indicating a degree of decrease in the Gibbs energy when a crack size (a) increases, based on a relationship between the crack size indicating the dimension of the crack model group set by the crack model group position setting unit and the Gibbs energy calculated by the Gibbs energy calculation unit.

2. The device (1, 100) according to claim 1, wherein
the arithmetic processing unit is configured to:

perform arithmetic processing so that the simulation model, to which the initial condition is applied, reaches the mechanical equilibrium state, with an elastic modulus in each of the positional elements of the current simulation model as a current elastic modulus, thereby calculating a stress and a strain for each of the positional elements of the simulation model when the simulation model reaches the mechanical equilibrium state;

calculate updated elastic moduli for the positional elements of the matrix polymer model based on the stress and the strain for each of the positional elements of the matrix polymer model;

update the elastic moduli for the positional elements of the matrix polymer model to the updated elastic moduli, and perform arithmetic processing again so that the simulation model reaches the mechanical equilibrium state, thereby calculating the stress and the strain for each of the positional elements of the simulation model when the simulation model reaches the mechanical equilibrium state; and

repeatedly perform the calculation of the updated elastic moduli and the calculation of the stress and the strain for each of the positional elements of the simulation model until the simulation model approaches a preset stable state, thereby calculating the stress, the strain, and the elastic modulus for each of the positional elements of the simulation model when the simulation model reaches the mechanical equilibrium state as the stable state.

3. The device (1, 100) according to claim 2, wherein the stable state is defined as a state within a predetermined range from a state in which minus twice the elastic strain energy equals the potential energy.

4. The device (1,100) according to claim 2, wherein the stable state is defines as a state in which changes in strain for all the positional elements of the simulation model are equal to or less than a predetermined value.

5. The device (1,100) according to any one of claims 1 to 4, wherein the matrix polymer model is set based on a secant elastic modulus representing a slope of a straight line connecting a point on a stress-strain curve and a point of origin.

6. The device (1, 100) according to any one of claims 1 to 5, wherein the crack model group position setting unit is configured to set the position and the dimension of the crack model group to be set by an input of an operator.

7. The device (1, 100) according to any one of claims 1 to 6, wherein
the crack model group position setting unit is configured to:

determine the position and the dimension of the crack model group that expands based on the stresses in the positional elements of the simulation model through arithmetic processing; and

set a position and a dimension of the expanded crack model group as a position and a dimension of the crack model group constituting a next simulation model.

8. The device (1, 100) according to any one of claims 1 to 7, wherein

the polymer material is a polymer composite material in which a filler (Pa) is dispersed in the matrix polymer, and the simulation model is composed of the matrix polymer model, a filler model (Ma) corresponding to the filler, or the crack model, for each of the positional elements of the model definition region.

9. The device (1, 100) according to claim 8, wherein

the matrix polymer model is composed of a polymer matrix model (Mb) and a polymer interface phase model (Mc) located between the polymer matrix model and the filler model, and
in the polymer interface phase model, an elastic modulus of the polymer interface phase model is defined, for each of the positional elements, using a phase field variable ($\sigma(r)$) for setting a ratio between a predetermined minimum elastic modulus and a predetermined maximum elastic modulus.

10. The device (1, 100) according to claim 9, wherein the elastic modulus of the polymer interface phase model is defined as a value continuously changing from the polymer matrix model side to the filler model side.

11. The device (1, 100) according to any one of claims 1 to 10, wherein

the elastic strain energy is calculated based on the stress and the strain for each of the positional elements of the simulation model, and
the potential energy is calculated based on a strain of the entire simulation model.

FIG. 1

FIG. 2

FILLER (Pa)

MATRIX POLYMER (Pb)

FIG. 3

FILLER MODEL (Ma)

POLYMER MATRIX MODEL (Mb)

POLYMER INTERFACE PHASE MODEL (Mc)

FIG. 4

FIG. 5

FIG. 6

M2

Mc

Ma

Md

Mb

a

■ FILLER (Ma)
☐ POLYMER MATRIX MODEL (Mb)
▨ POLYMER INTERFACE PHASE MODEL (Mc)
▨ CRACK MODEL (Md)

FIG. 7

## FIG. 8

```
        ( BASE MODEL CREATION PROCESSING )
                        │
                        ▼                    ⌐S11
 ┌──────────────────────────────────────────────────┐
 │ SET ELASTIC MODULUS OF FILLER MODEL              │
 │ SET ELASTIC MODULUS OF POLYMER MATRIX MODEL      │
 │ SET ELASTIC MODULUS OF POLYMER INTERFACE PHASE MODEL │
 └──────────────────────────────────────────────────┘
                        │
                        ▼                    ⌐S12
 < IMAGE UTILIZATION >  < CREATION TYPE? >   < FREE CREATION >
                        < IMAGE REFERENCE >
```

| ⌐S21 | ⌐S31 | |
|---|---|---|
| ACQUIRE CROSS-SECTIONAL IMAGE | ACQUIRE CROSS-SECTIONAL IMAGE | |

| ⌐S22 | ⌐S32 | ⌐S41 |
|---|---|---|
| SET FILLER MODEL BASED ON CROSS-SECTIONAL IMAGE | SET FILLER MODEL BASED ON CROSS-SECTIONAL IMAGE | SET POSITION OF FILLER MODEL |

| | ⌐S33 | |
|---|---|---|
| | MODIFY POSITION OF FILLER MODEL | |

| ⌐S23 | ⌐S34 | ⌐S42 |
|---|---|---|
| SET POSITION OF POLYMER INTERFACE PHASE MODEL | SET POSITION OF POLYMER INTERFACE PHASE MODEL | SET POSITION OF POLYMER INTERFACE PHASE MODEL |

| ⌐S24 | ⌐S35 | ⌐S43 |
|---|---|---|
| SET POSITION OF POLYMER MATRIX MODEL | SET POSITION OF POLYMER MATRIX MODEL | SET POSITION OF POLYMER MATRIX MODEL |

```
                    ( END )
```

FIG. 9

```
        ╭─────────────────────────────╮
        │      CRACK MODEL GROUP      │
        │  POSITION SETTING PROCESSING │
        ╰─────────────────────────────╯
                      │
                      ▼              ⌐S51
        ┌─────────────────────────────┐
        │      ACQUIRE BASE MODEL      │
        └─────────────────────────────┘
                      │
                      ▼              ⌐S52
        ┌─────────────────────────────┐
        │ SET POSITION AND SIZE OF CRACK MODEL GROUP │
        │ BY SETTING CONTINUOUS CRACK MODELS │
        └─────────────────────────────┘
                      │
                      ▼
        ╭─────────────────────────────╮
        │             END             │
        ╰─────────────────────────────╯
```

EP 4 550 199 A1

FIG. 10

```
        ( ARITHMETIC PROCESSING )
                    |
                    v           S61
        ┌───────────────────────────────┐
        │    ACQUIRE SIMULATION MODEL    │
        └───────────────────────────────┘
                    |
                    v           S62
        ┌───────────────────────────────────────────┐
        │           APPLY INITIAL CONDITION          │
        │ (PREDETERMINED STRESS/PREDETERMINED STRAIN) │
        └───────────────────────────────────────────┘
                    |
                    v           S63
        ┌───────────────────────────────────────────────────┐
        │            CALCULATE STRESS AND STRAIN             │
        │ FOR EACH POSITION ELEMENT OF SIMULATION MODEL      │
        │ WHEN BECOMING IN MECHANICAL EQUILIBRIUM STATE      │
        └───────────────────────────────────────────────────┘
                    |
                    v           S64
        ┌───────────────────────────────┐
        │    DETERMINE WHETHER OR NOT    │
        │      IT IS IN STABLE STATE     │
        └───────────────────────────────┘
                    |
                    v           S65
        ⟨         STABLE STATE?         ⟩─── No ───┐
                    |                              |
                   Yes                             v           S66
                    |                  ┌───────────────────────────┐
                    |                  │        CALCULATE          │
                    |                  │ MODIFIED ELASTIC MODULUS  │
                    |                  │  OF MATRIX POLYMER MODEL  │
                    |                  └───────────────────────────┘
                    v
             (      END      )
```

23

FIG. 11

FIG. 12

$$\text{ENERGY RELEASE RATE } g = -\frac{\Delta G}{\Delta a}$$

GIBBS ENERGY G

CRACK SIZE a

FIG. 13

FIG. 14

(a)  (b)  (c)  (d)

## INTERNATIONAL SEARCH REPORT

| International application No. |
| --- |
| **PCT/JP2023/041978** |

**A. CLASSIFICATION OF SUBJECT MATTER**

***G06F 30/20***(2020.01)i; ***G01N 3/00***(2006.01)i
FI:    G06F30/20; G01N3/00 T

According to International Patent Classification (IPC) or to both national classification and IPC

**B. FIELDS SEARCHED**

Minimum documentation searched (classification system followed by classification symbols)

G06F30/20; G01N3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | 堀井 裕太 HORII, Yuta et al. フェーズフィールド微視的弾性論（反復法）を用いた破壊靭性の評価 Calculation of fracture toughness based on the iteration method of phase-field microelasticity theory. 日本鉄鋼協会講演論文集「材料とプロセス」 第169回, 01 March 2015, vol. 28, no. 1, p. 311, non-official translation (Current advances in materials and processes : Report of the 169th ISIJ meeting) 2. Calculation Methodology, 3. Calculation Results and Discussion | 1-11 |
| A | JP 2020-95497 A (THE YOKOHAMA RUBBER CO., LTD.) 18 June 2020 (2020-06-18) paragraphs [0031]-[0061] | 1-11 |
| A | JP 2019-106108 A (THE YOKOHAMA RUBBER CO., LTD.) 27 June 2019 (2019-06-27) paragraphs [0026]-[0079] | 1-11 |
| A | JP 2016-81183 A (SUMITOMO RUBBER INDUSTRIES, LTD.) 16 May 2016 (2016-05-16) entire text, all drawings | 1-11 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **11 January 2024** | **23 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/041978**

| Patent document cited in search report | | | Publication date (day/month/year) | Patent family member(s) | Publication date (day/month/year) |
|---|---|---|---|---|---|
| JP | 2020-95497 | A | 18 June 2020 | (Family: none) | |
| JP | 2019-106108 | A | 27 June 2019 | (Family: none) | |
| JP | 2016-81183 | A | 16 May 2016 | (Family: none) | |

Form PCT/ISA/210 (patent family annex) (July 2022)

**REFERENCES CITED IN THE DESCRIPTION**

**Patent documents cited in the description**

- JP 2018025489 A

- JP 2020086835 A